# EUROPEAN PATENT SPECIFICATION

(11) **EP 3 489 754 B1**
(45) Date of publication and mention of the grant of the patent: **28.10.2020**
(21) Application number: 17831128.8
(22) Date of filing: 21.07.2017
(51) Int. Cl.: G03B 35/00, B60K 37/00, G09F 19/12, B60K 35/00

(54) **THREE-DIMENSIONAL MOLDED OBJECT**
DREIDIMENSIONALER FORMKÖRPER
ARTICLE MOULÉ TRIDIMENSIONNEL

(30) Priority: 22.07.2016 JP 2016144456
(43) Date of publication of application: 29.05.2019
(73) Proprietor: FUJIFILM Corporation, Tokyo 106-8620 (JP)
(72) Inventor: KIDO, Takeo, Fujinomiya-shi Shizuoka 418-8666 (JP); ABIRU, Daisaku, Fujinomiya-shi Shizuoka 418-8666 (JP)
(74) Representative: Hoffmann Eitle
(86) International application number: PCT/JP2017/026396
(87) International publication number: WO 2018/016612

(56) References cited:
- WO-A1-2017/126540
- WO-A2-01/73497
- WO-A2-2010/033836
- JP-A- H11 109 287
- JP-A- 2004 173 749
- JP-A- 2005 131 261
- JP-A- 2008 052 202
- JP-A- 2011 075 791
- JP-B2- 4 192 071
- US-A1- 2013 094 789

## Description

### BACKGROUND OF THE INVENTION

### 1. Field of the Invention

The present invention relates to a three-dimensional molded article.

### 2. Description of the Related Art

As a substance for enhancing designability or differentiating designs of the interiors of automobiles, the appearances of electronic goods, and the like, there is a decorative film. A number of decorative films are produced by forming a pattern on a film base material by printing or the like, but these decorative films have a limitation on the power of expression, the diversity of expression, and the like.

In order to improve the power of expression or diversify expression, techniques enabling the observation of an image for a variable view (changing image) or an image for a three-dimensional view (three-dimensional image) using a lenticular sheet in which a number of so-called cylindrical lenses having a semicircular column shape are arrayed in a direction orthogonal to the extension direction thereof are known. In these techniques, for example, stripe images obtained by dividing a right-view image and a left-view image captured from two (right and left) views in a stripe shape respectively are alternately disposed on the rear surface side, which is the flat lens surface side, of the lenticular sheet, and two adjacent stripe images are located on the flat lens surface of one cylindrical lens. In a case in which an image for a three-dimensional view is formed, the right eye and the left eye observe the right-view image and the left-view image, between which there is parallax, respectively through the respective cylindrical lenses, whereby a three-dimensional image can be observed. In addition, it is also known that a sense of three-dimensions is further improved by dividing a multi-view image made up of N (N is 3 or more)-view images in a stripe shape and disposing the N stripe images side by side on the rear of one cylindrical lens (for example, refer to JP2011-154301A). In addition, in a case in which an image for a variable view is formed, the pattern being observed switches due to the movement of the observation point, that is, a change in the viewing angle.

As a substance that further improves the sense of three-dimensions and/or a decorative effect, a lens-attached printed article obtained by laminating a paper base material or a film base material on a printed-image surface side of a sheet layer comprising a transparent film base material, a lens portion constituted of a group of fine lenses that are arrayed at predetermined pitches on one surface of the transparent film base material, and a printed image formed on the other surface so that the lens pitches and the printed-image pitches coincide with each other, through a thermoplastic resin layer has been proposed (for example, refer to JP2008-064938A). In this lens-attached printed article, the sheet layer has an uneven structure, and the exposed surface of the paper base material or the film base material is flat.

There is a lenticular sheet formed in a three-dimensional shape, and, for example, a decorative material obtained by shaping a lenticular sheet as a whole to a three-dimensional shape in which one side protrudes and the opposite side is hollowed has been proposed (for example, refer to JP2005-131891A). Two sheets of the decorative materials are laminated together so that the extension directions of cylindrical lenses become orthogonal to each other and comprise light-emitting bodies on the hollow side, thereby being used in a decorative illumination device. In addition, a three-dimensional lenticular in which a lenticular sheet is provided with a print layer on the rear surface, is shaped into the same shape as the shape of a part of a toy body, and the shaped lenticular sheet is attached to the surface of the part of the toy body has been proposed (for example, refer to JP2005-131261A). In this three-dimensional lenticular, the print layer is formed by dividing different pictures at equal intervals respectively and alternately printing the divided pictures in a state of corresponding to lenses. JP 4192071 B2 discloses features falling under the preamble of claim 1.

### SUMMARY OF THE INVENTION

However, the techniques in which a lenticular sheet is used that are known by JP2011-154301A or the like and the lens-attached printed article described in JP2008-064938A has a limitation in terms of the use and the designability due to the flatness of the sheet. In addition, the decorative material of JP2005-131891A exhibits a decorative property due to the hollows and the light-emitting bodies disposed on the hollow side and thus, similarly, has a limitation in terms of the use. The three-dimensional lenticular that is used in a toy body, which is described in JP2005-131261A, has a limitation in terms of the use due to the poor accuracy, and there is a demand for the improvement of the designability in order to broaden the use.

Therefore, an object of the present invention is to provide a three-dimensional molded article which has a superior designability by imparting changes to the appearance of light.

The present invention comprises a sheet, a lens portion, and an image-forming portion. The sheet has a sheet surface that is curved and has a light-transmitting property. The lens portion is provided on one sheet surface of the sheet so as to curve along the curved surface and has a plurality of protruding lenses disposed in parallel. The image-forming portion is provided on the other sheet surface of the sheet, and an image is formed on the image-forming portion. The curved surface has three regions having different normal directions and has a shape in which one of the normal directions of the respective regions is inclined to a plane including the other two normal directions. A minimum value of widths of the lenses is in a range of 25.4 µm or more and 508.0 µm or less.

The sheet preferably has a curvature that changes along a direction in which the lenses extend.

The sheet preferably has a curvature that changes along an array direction of the plurality of lenses.

The lens portion has a lens having cross-sectional shapes that are different at a first position and a second position in the direction in which the lenses extend.

The lens portion preferably includes two lenses having cross-sectional shapes that are mutually different at a third position and a fourth position in the array direction of the plurality of lenses.

A thickness of the lens portion preferably changes along at least any one of the direction in which the lenses extend or the array direction of the plurality of lenses.

A curvature radius of the sheet surface is preferably at least the width of the lens.

The three-dimensional molded article of the present invention imparts more changes to the appearance of light and has excellent designability.

### BRIEF DESCRIPTION OF THE DRAWINGS

Fig. 1 is an explanatory view illustrating a usage aspect of a decorative member to which the present invention is carried out.
Fig. 2 is a cross-sectional schematic view of a dashboard material.
Fig. 3 is an exploded explanatory view for explaining a layer structure of the decorative member.
Fig. 4 is an explanatory view of a sheet surface that is curved.
Fig. 5 is an explanatory view of the decorative member.
Fig. 6A is an explanatory view of a cross section taken along a line (VIa)-(VIa) in Fig. 5.
Fig. 6B is an explanatory view of a cross section taken along a line (VIb)-(VIb) in Fig. 5.
Fig. 7 is an explanatory view of the decorative member.
Fig. 8A is an explanatory view of a lens at a third position.
Fig. 8B is an explanatory view of a lens at a fourth position.
Fig. 9 is a schematic view of a molding article-producing device.
Fig. 10 is a cross-sectional schematic view of a shaping device.
Fig. 11 is a schematic view of the decorative member.
Fig. 12 is an explanatory view of an image formed in a print layer.
Fig. 13 is a plan view of the decorative member.
Fig. 14 is an explanatory view of a curved surface portion of a cross section taken along a line XIV-XIV in Fig. 13.
Fig. 15 is an explanatory view of an image at a point P.
Fig. 16 is an explanatory view of an image at a point R.
Fig. 17 is an explanatory view of a curved surface portion of a cross section taken along a line XVII-XVII in Fig. 13.
Fig. 18 is an explanatory view of the image at the point P.
Fig. 19 is an explanatory view of the image at the point Q.
Fig. 20 is a captured image of the decorative member.
Fig. 21 is another captured image of the decorative member.

### DESCRIPTION OF THE PREFERRED EMBODIMENTS

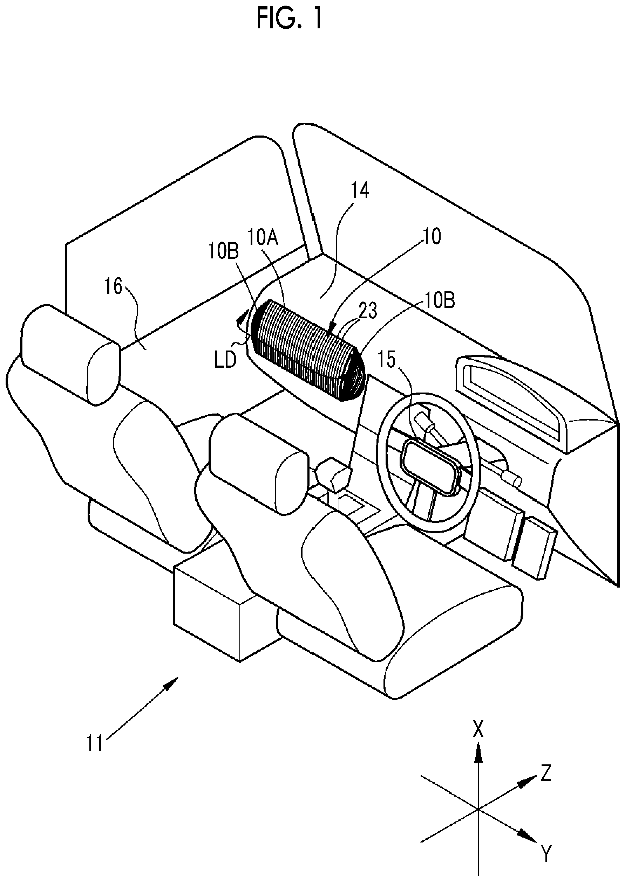

In Fig. 1, a decorative member 10 as an example of a three-dimensional molded article is a member for imparting changes to the appearance of light by refracting light incident on the decorative member 10 from the outside and light reflected at an interface described below in the decorative member 10. Although described below in detail, the decorative member 10 has a curve shape and is used as an interior component of an automobile 11. The decorative member 10 is attached so as to be buried in another interior component, and, in this example, is attached as a part of a dashboard 14. The decorative member 10 has a front surface portion 10A that protrudes toward an opposing observer side and has an elliptical arc cross-sectional shape and side surface portions 10B that are disposed on both right and left sides of the front surface portion 10A in Fig. 1 and have a spherical shape which are integrally formed. As another example of the three-dimensional molded article, a decorative member that has a different curve shape from the decorative member 10 and is attached, for example, as a part of a steering wheel 15 or a door panel 16 is exemplified. In addition, the three-dimensional molded article is not limited to components of automobiles and may be, for example, a home appliance, a suitcase, a toy, or the like. Meanwhile, in Fig. 1, an arrow X indicates the vertical direction, an arrow Y indicates a right and left direction in the case of seeing a windshield (a front-side window of the automobile, windshield or windscreen) from the inside of the automobile 11, and an arrow Z indicates a forward direction, respectively.

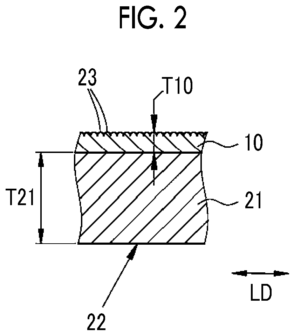

As illustrated in Fig. 2, the decorative member 10 is comprised in a state of being laminated on a dashboard material main body 21, and the dashboard material main body 21 and the decorative member 10 constitute a dashboard material 22. The decorative member 10 is disposed so as to cover an observer-side surface of the dashboard material main body 21. The dashboard material main body 21 is a forming member for forming the dashboard 14, has impact resistance, stiffness, heat resistance, and the like for functioning as the dashboard 14, and is formed of plastic. As the plastic forming the dashboard material main body 21, for example, a variety of well-known plastics such as an alloy (blend) of polycarbonate (hereinafter, referred to as PC) and an acrylonitrile butadiene styrene copolymer (hereinafter, referred to as ABS) and acrylonitrile·styrene·glass fiber can be used. In the present embodiment, an alloy (blend) of PC and ABS is used. Meanwhile, the acrylonitrile·styrene·glass fiber refers to an acrylonitrile styrene copolymer containing a glass fiber and is a so-called composite material of an acrylonitrile styrene copolymer and a glass fiber. In this example, a thickness T21 of the dashboard material main body 21 is set to approximately 3 mm, but is not limited thereto, and may be appropriately set depending on the intended function and the material of the dashboard 14.

In this example, the decorative member 10 is provided in a state of being closely attached to the dashboard material main body 21, but may be provided with a gap therebetween. The decorative member 10 has a plurality of protruding lenses 23 on one surface. In Fig. 2, the respective lenses 23 are drawn to protrude in a paper depth direction. The decorative member 10 is disposed in a state in which the respective lenses 23 face the observer side and the opposite-side surface faces the dashboard material main body 21 side. Therefore, the lenses 23 are observed from an observer in Fig. 1. The decorative member 10 is formed in a thin sheet shape, and a thickness T10 of the decorative member 10 is preferably 0.06 mm or more and 5 mm or less and more preferably 0.1 mm or more and 0.5 mm or less. In this example, the thickness T10 is in the above-described range, but changes depending on positions. However, the thickness T10 may also be constant.

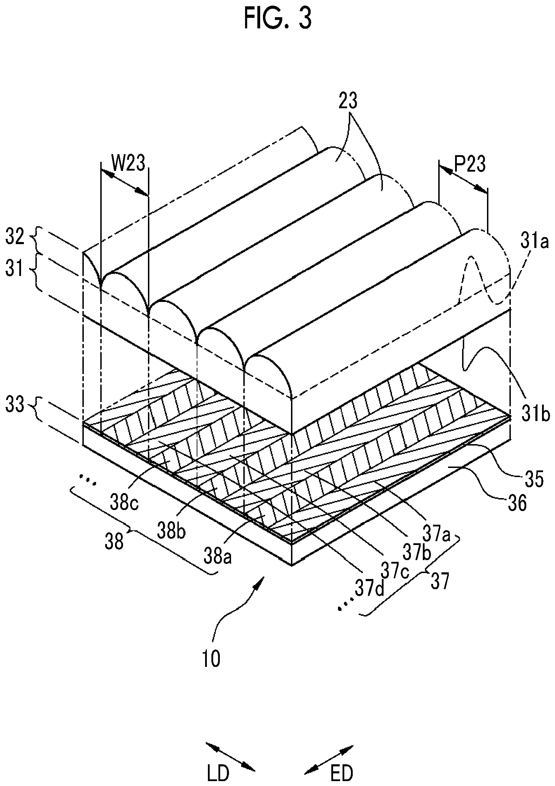

As illustrated in Fig. 3, the decorative member 10 comprises a sheet 31, a lens portion 32, and an image-forming portion 33. In this example, the sheet 31 is transparent, but does not need to be transparent at all times, and simply needs to have a light-transmitting property, that is, light transmittance. Here, the light refers to visible light (having a wavelength in a range of approximately 380 nm or more and 750 nm or less). The expression "having a light-transmitting property" refers to both being transparent and being translucent. The expression "being transparent" refers to a property in a state in which, regarding a property of transmitting light, the transmittance is extremely high and a side beyond the sheet 31 is clearly visible through the sheet 31. The expression "being translucent" refers to a property in a state in which, although the sheet has a property of transmitting light, but the transmitted light is diffused or the transmittance is low, and thus, unlike "being transparent", a shape or the like on the side beyond the sheet 31 cannot be clearly recognized or cannot be recognized through the sheet 31. In Fig. 3, for the convenience of description, both sheet surfaces of the sheet 31 are drawn as a plane, but the sheet 31 has a sheet surface that is curved. Meanwhile, the detail of the shape of the curved surface will be described below using a separate drawing.

The sheet 31 is formed of a thermoplastic resin, the thermoplastic resin is preferably polyethylene terephthalate (hereinafter, referred to as PET), PC, triacetyl cellulose (hereinafter, referred to as TAC), acryl, ABS, or the like and, among these, more preferably PC or acryl, and, in the present embodiment, PC is used. In addition, the sheet 31 may include a refractive index adjuster, zinc oxide (ZnO), titanium oxide (TiO₂), or the like in addition to the thermoplastic resin.

The decorative member 10 does not need to comprise the sheet 31, but preferably include the sheet. The thickness of the decorative member 10 is adjusted by providing the sheet 31 and adjusting the thickness of the sheet 31, and thus it is possible to adjust the optical path length.

The lens portion 32 is provided on one sheet surface (hereinafter, referred to as the first sheet surface) 31a of the sheet 31 and curves along the curved surface of the first sheet surface 31a. The lens portion 32 is constituted of the plurality of protruding lenses 23 as described above, and each lens 23 has a tubular shape. The plurality of lenses 23 is arrayed side by side, that is, disposed in parallel in a direction orthogonal to a direction in which the protruding lenses 23 extend (hereinafter, referred to as the extension direction) in a state in which the plurality of lenses 23 is in contact with one another. Meanwhile, a reference sign ED in the respective drawings represents the extension direction of the lenses 23, and a reference sign LD represents the array direction of the plurality of lenses 23. The lens portion 32 is transparent. In a case in which the lens portion 32 and the sheet 31 are both transparent as in the present embodiment, the boundary therebetween is not visible; however, in Fig. 3, for the convenience of description, the boundary is indicated by a broken line. The boundary between the lens portion 32 and the sheet 31 is a surface obtained by connecting individual trough portions formed between adjacent lenses 23 in Fig. 3.

As the lens 23, a cylindrical lens is used. However, the cylindrical lens mentioned herein is not limited to a case in which the cross-sectional shape is strictly a semicircular column shape, that is, the cross-sectional shape of the protruding lens surface (hereinafter, referred to as the first lens surface) is an arc and also refers to a lens in which the cross-sectional shape of the first lens surface is a parabola, an elliptical arc, or a different protruding curve. In this example, the detail will be described below using a separate drawing, but the lenses 23 having mutually different cross-sectional shapes in the first lens surface are present in a mixed form. In addition, the lens 23 is not limited to the cylindrical lens and may be, for example, a prism.

The minimum value of widths W23 of the lenses 23 is in a range of 25.4 µm or more and 508.0 µm or less. The width W23 of the lens 23 is the dimension of the lens 23 in an array direction LD of the plurality of lenses 23 as illustrated in Fig. 3. In a case in which the widths of the lenses 23 are not constant, the minimum value of the widths W23 of the lenses 23 is the smallest value of the widths of the lenses 23 in the decorative member 10. The minimum value of the widths W23 of the lenses 23 is extremely small as described above, and thus the decorative member 10 is excellent in terms of accuracy and becomes excellent in terms of designability as described below. The minimum value of the widths W23 of the lenses 23 is more preferably in a range of 50.8 µm or more and 338.7 µm or less and still more preferably in a range of 84.7 µm or more and 254.0 µm or less.

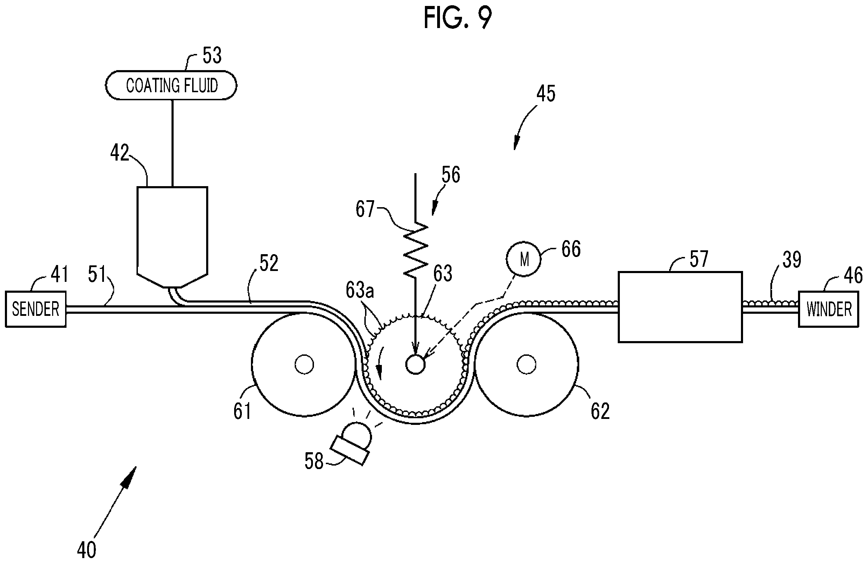

Here, the decorative member 10 is made by shaping a molding article 39 (refer to Fig. 9) as described below, and the lenses 23 in the decorative member 10 are a deformed aspect of lenses in the molding article 39. The molding article 39 being used has a pitch between the lenses in a range of 50 LPI (lines per inch) or more and 1,000 LPI or less. In the present embodiment, the decorative member 10 is made using individual molding articles 39 having a pitch between the lenses of 50 LPI, 100 LPI, 200 LPI, 300 LPI, 500 LPI, and 1,000 LPI, and, in this case, the widths W23 of the lenses 23 in portions that are not deformed by shaping are 508.0 µm, 254.0 µm, 127.0 µm, 84.7 µm, 50.8 µm, and 25.4 µm respectively. The above-described range of the minimum value of the widths W23 of the lenses 23 is a range specified as described above. In addition, the more the portion of the lenses 23 is deformed in the array direction LD of the plurality of lenses 23 by shaping, the larger the widths W23 become. For example, in a case in which the stretching percentage of the portion that is most stretched in the array direction LD is 100%, and the molding articles 39 having the respective pitches described above are used respectively, the widths W23 of the lenses 23 in the portions of the decorative members 10 that are most stretched in the array direction LD become 1,016.0 µm, 508.0 µm, 254.0 µm, 169.3 µm, 101.6 µm, and 50.8 µm respectively. Meanwhile, the stretching percentage refers to a percentage obtained from {(LY-LX)/LX}×100 in which the dimension of a specific place in the molding article 39 is represented by LX and the dimension of a portion in the decorative member 10 obtained by shaping which corresponds to the specific place of the molding article 39 is represented by LY.

A pitch P23 between the lenses 23 in the decorative member 10 is preferably 25.0 µm or more and 5,000.0 µm or less. The pitch P23 is in the above-described range, but preferably changes depending on positions. Meanwhile, the pitch P23 refers to a distance between apexes on the first lens surface side of the lenses 23.

The lens portion 32 includes a thermosetting polymer. The thermosetting polymer refers to a polymer that is generated by heating a thermosetting compound. The thermosetting compound refers to a compound that cures by heating. The lens portion 32 may also include a photocurable polymer. The photocurable polymer refers to a polymer that is generated by irradiating a photocurable compound with light. The photocurable compound refers to a compound that cures by the irradiation with light. The lens portion 32 of the present embodiment includes a curing product of tricyclodecane dimethanol diacrylate (hereinafter, referred to as ADCP). Meanwhile, the sheet 31 also may include the thermosetting polymer and/or the photocurable polymer.

The image-forming portion 33 is a so-called image display body since different images are observed by the movement of the observation point in the case of observing the decorative member 10 from the lens portion 32 side. In this example, the image-forming portion 33 is provided in a layer shape on a second sheet surface 31b of the sheet 31 in a state of being curved along the curved surface of the second sheet surface 31b. The image-forming portion 33 comprises a print layer 35 as a record layer in which an image is recorded and a support 36 provided with the print layer 35. The print layer 35 is in contact with the second sheet surface 31b. Meanwhile, in this example, the image-forming portion 33 having the print layer 35 provided on the support 36 is disposed on the second sheet surface 31b, but the constitution is not limited to this aspect. For example, an image-forming portion only formed of the print layer 35 may be provided on the second sheet surface 31b.

In this example, two different places in the array direction LD are set as a first observation point and a second observation point in the decorative member 10, and adjustment is made so that a first image 37 can be observed from the first observation point and a second image 38 that is different from the first image 37 can be observed from the second observation point. As described above, the decorative member 10 has a plurality of images for a variable view. The same image is observed using the right eye and the left eye at the first observation point and the second observation point respectively. The print layer 35 is a layer on which linear image areas corresponding to the first image 37 and the second image 38 respectively (hereinafter, referred to as the linear image areas) 37a, 37b, 37c, ···, 38a, 38b, 38c, ··· are formed and recorded on the surface of the support 36. The linear image areas 37a, 37b, 37c, ··· constituting the first image 37 and the linear image areas 38a, 38b, 38c, ··· constituting the second image 38 extend in the extension direction ED respectively and are disposed alternately in the array direction LD and one by one so as to correspond to the respective lenses 23. That is, as illustrated in Fig. 3, the print layer 35 is divided into a plurality of regions that corresponds to the plurality of lenses 23 in the array direction LD, and the plurality of regions is constituted of a pair of the linear image area 37a and the linear image area 38a, a pair of the linear image area 37a, 37b and the linear image area 38b, a pair of the linear image area 37c and the linear image area 38c, ··· respectively.

In this example, two observation points are set in the array direction LD, and thus the number of images is set to two (the first image 37 and the second image 38), but the number of observation points to be set and the number of images for a variable view are not limited to two. That is, the number of observation points to be set and the number of images in the array direction LD may be three or more.

In this example, each of the linear image areas 37a, 37b, 37c, ··· is formed as a single region extending in the extension direction ED, but the constitution is not limited thereto. For example, each of the linear image areas 37a, 37b, 37c, ··· may be constituted of a plurality of rectangular regions that are divided in the extension direction ED. In addition, these rectangular regions may be mutually identical images or may be different images. What has been described above shall also apply to the linear image areas 38a, 38b, 38c, ···.

The first image 37 and the second image 38 are not limited to images for a variable view and may also be images for a three-dimensional view. That is, a right-view image and a left-view image from which a three-dimensional image is observed due to parallax between the right eye and the left eye may be used as the first image 37 and the second image 38. In addition, the first image 37 may be used as an image for a three-dimensional view that is observed at the first observation point, the second image 38 may be used as an image for a three-dimensional view that is observed at the second observation point and is different from the first image 37, and the first image 37 and the second image 38 may be an image obtained by combining an image for a three-dimensional view for the use of a variable view.

As any of an image for a variable view or an image for a three-dimensional view, the first image 37 and the second image 38 may be different images. For example, the first image 37 and the second image 38 may constitute, for example, an image of the graphic depiction or the like of a single landscape or a single scene which is a single pattern.

In this example, the first image 37 and the second image 38 are different from each other, but may be identical to each other. For example, identical images having a regular or periodic pattern formed of a plurality of colors or a single color with different brightness may be used as the first image 37 and the second image 38 or images that are identical to each other in terms of each of color, brightness, and glossiness may be used as the first image 37 and the second image 38. Examples of the images having a regular or periodic pattern formed of a plurality of colors include images of a stone material tone and an earth wall tone and the like. Examples of the image having a regular or periodic pattern formed of a single color with different brightness include images of a carbon material tone and the like. As the images that are identical to each other in terms of each of color, brightness, and glossiness, a so-called piano black image that is observed as mirror surface-shaped black, a so-called pearl white image that is observed as glossy white such as a pearl surface, and the like.

The print layer 35 is formed of paint and, in the present example, formed of a pigment. The print layer 35 may be formed of paint other than a pigment and may be formed of, for example, a dye. In a case in which the sheet 31 is formed of PET, PC, or TAC described above, the print layer 35 is preferably formed using a pigment for the sheet 31.

As the record layer in the present embodiment, the print layer 35 formed by printing is used. However, the record layer is not limited thereto and may be, for example, a transfer layer on which an image is formed by transfer, a painting or calligraphic painting drawn using a pigment or a dye, or the like. In the decorative member 10, due to the above-described constitution, light that is incident on the decorative member 10 from the outside and reflected on the interface between the print layer 35 and the sheet 31 is refracted by the plurality of lenses 23, thereby imparting changes to the appearance of light.

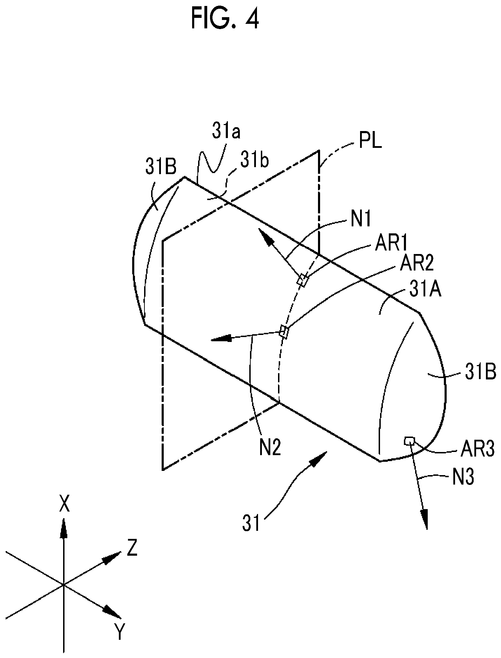

The curved surfaces of the first sheet surface 31a and the second sheet surface 31b of the sheet 31 will be described with reference to Fig. 4. Meanwhile, the first sheet surface 31a and the second sheet surface 31b have the same shape, and thus the first sheet surface 31a will be described in detail, and the second sheet surface 31b will not be described. In the sheet 31, as illustrated in Fig. 4, a front surface portion 31A that is a constituent member of the front surface portion 10A (refer to Fig. 1) of the decorative member 10 and side surface portion 31B that are constituent members of the side surface portions 10B (refer to Fig. 1) are integrally formed. The first sheet surface 31a has three regions having different normal directions and is provided with a curved surface in which one of the normal directions of the respective regions is inclined to a plane including the other two normal directions. The above-described first sheet surface will be specifically described below.

Two random regions of the front surface portion 31A on the first sheet surface 31a are considered as a first region AR1 and a second region AR2, and a random region of the side surface portion 31B on the first sheet surface 31a is considered as a third region AR3. Meanwhile, in Fig. 4, the first region AR1 and the second region AR2 are on an XZ plane, but are not limited thereto. In a case in which a normal line from the first region AR1 is considered as a first normal line N1, a normal line from the second region AR2 is considered as a second normal line N2, and a normal line from the third region AR3 is considered as a third normal line N3, a plane PL including a direction of the first normal line N1 and a direction of the second normal line N2 is imagined. As described above, the plane PL is a plane including two "directions". Therefore, in a case in which the two straight lines (the first normal line N1 and the second normal line N2) are not in a twisted position, the plane PL is the same plane as a plane including the two straight lines. On the other hand, in a case in which two straight lines are in a twisted position, a plane including these two straight lines cannot be imagined, but a plane including the "directions" of these two straight lines can be imagined, and this plane (the plane including the "directions" of two straight lines that are in a twisted position) is imagined as the plane PL. That is, the plane PL is not defined as a plane including two straight lines, but is defined as a plane including the "directions" of two straight lines, and thus, even in a case in which the first normal line N1 and the second normal line N2 are in a twisted position, the plane PL is imagined. In addition, a direction of the third normal line N3 is inclined to the plane PL. Meanwhile, the first region AR1 and the second region AR2 may be on the side surface portion 31B, and the third region AR3 may be on the front surface portion 31A. In addition, the first region AR1 and the third region AR3 may be on the front surface portion 31A, and the second region AR2 may be on the side surface portion 31B. What has been described above shall also apply to the second sheet surface 31b.

Therefore, the sheet 31 having the first sheet surface 31a and the second sheet surface 31b is curved in the extension direction ED of the lenses 23 and the array direction LD of the plurality of lenses 23. In addition, the lens portion 32 (refer to Fig. 3) and the image-forming portion 33 (refer to Fig. 3) are respectively provided so as to curve along the above-described curved surface, and thus the decorative member 10 (refer to Fig. 3) also has a shape curved in the extension direction ED of the lenses 23 and the array direction LD of the plurality of lenses 23.

Therefore, the first image 37 and the second image 38 on the print layer 35 are respectively observed as images having unevenness in reflected light and, for example, are observed with the contrasting density of color and/or a brightness difference. In a case in which the first image 37 and the second image 38 for a variable view are formed, an image being observed is switched from the first image 37 to the second image 38 or from the second image 38 to the first image 37 due to the movement of the observation point from one of the first observation point and the second observation point to the other, and, in an image after the switching, a change is imparted to the appearance of light. Therefore, in the decorative member 10, the movement direction of the observation point at which the switching of one of the first image 37 and the second image 38 to the other is recognized is not only the array direction LD, and a plurality of movement directions is present. Therefore, in addition to the first observation point and the second observation point that are originally set, observation points at which the switching of images by the movement is recognized develop.

As described above, the decorative member 10 curves in the array direction LD of the lenses 23 and/or the extension direction ED, and thus the appearance of light at one random first observation point becomes more complicated, additionally, the appearance of an image which is recognized as light by the movement of the observation point also becomes more complicated, and the designability further enhances.

The curvature radii of the first sheet surface 31a and the second sheet surface 31b are preferably at least the width of the lens 23, that is, 25.4 µm or more, in the present embodiment, is in a range of 0.1 mm or more and 0.6 mm or less, and change depending on portions. In a case in which the widths of the lenses 23 are not constant, the smallest dimension of the widths of the lenses 23 in the decorative member 10 is set as the possible minimum value of the curvature radius. In a case in which the curvature radii of the first sheet surface 31a and the second sheet surface 31b are 0.025 mm or more, the above-described action can be more reliably obtained, and it is possible to deal with a highly accurate image of approximately 1,000 LPI. In addition, the larger the curvature radii of the first sheet surface 31a and the second sheet surface 31b are than the pitch P23 between the lenses 23 (for example, a case in which the curvature radii are approximately ten times larger than the pitch), it becomes easy to more reliably recognize the switching of images in the case of setting the first image 37 and the second image 38 as images for a variable view. Meanwhile, the decorative member 10 may comprise a planar portion. The curvature radius of the planar portion is limitless, and thus the maximum value of the curvature radii of the first sheet surface 31a and the second sheet surface 31b is limitless. The curvature radii of the first sheet surface 31a and the second sheet surface 31b are more preferably 0.1 mm or more.

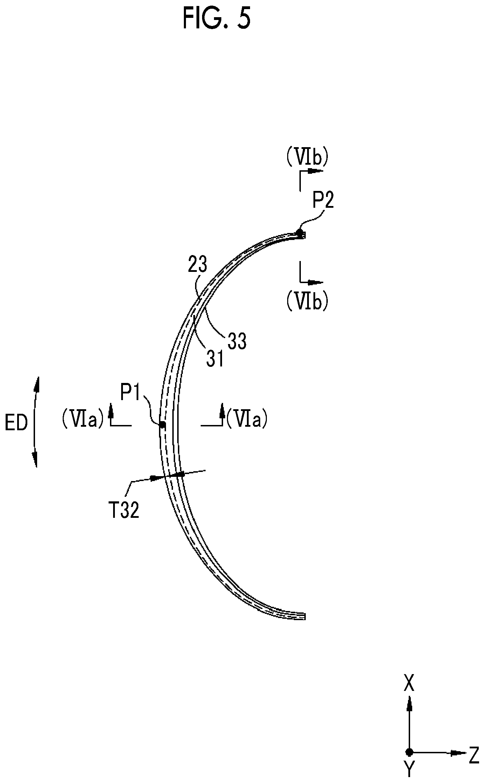

The curvature of the sheet 31 preferably changes along the extension direction ED of the lenses 23. In the present embodiment, the curvature of the sheet 31 changes along the extension direction ED of one random lens 23 on the front surface portion 10A. Therefore, the curvature of the front surface portion 10A also changes along the extension direction ED of the lenses 23. For example, in Fig. 5, the curvatures of the sheet 31 and the front surface portion 10A continuously increase gradually from the center toward the upper side and the lower side in the vertical direction X. Therefore, the appearance of light by the movement of the observation point becomes more complicated, and the designability further enhances. Meanwhile, in Fig. 5, in order to prevent the drawing from becoming complicated, a hatching indicating a cross section is not provided.

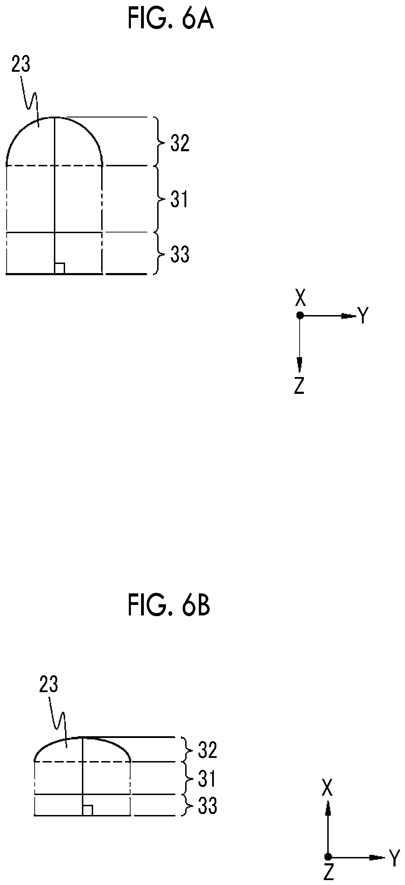

In addition, as illustrated in Fig. 5, the lens portion 32 on the front surface portion 10A preferably includes a plurality of lenses 23 having cross-sectional shapes that are different at a first position and a second position in the extension direction ED. Here, the center in the vertical direction X in Fig. 5 is considered as the first position P1, and the upper side end portion is considered as the second position P2. In the case of comparing the cross section (refer to Fig. 6A) at the first position P1 to the cross section (refer to Fig. 6B) at the second position P2, the width of the lens 23 remains almost identical, but the height is higher, and the cross-sectional shape is a more, substantially, semicircular shape. The lens 23 at the second position P2 has a collapsed semicircular shape as illustrated in Fig. 6B. The cross-sectional shape of the lens 23 continuously changes from the first position P1 toward the second position P2. Meanwhile, there is a case in which the respective cross sections at the first position P1 and the second position P2 are switched depending on conditions for producing the decorative member 10 by a heat process described below.

A thickness T32 of the lens portion 32 (refer to Fig. 3) preferably changes along the extension direction ED of the lens 23, and, in the present embodiment, the thickness changes along the extension direction. As illustrated in Fig. 5, the thickness T32 of the lens portion 32 continuously decreases gradually from the center toward the upper side and the lower side in the vertical direction X.

As described above, the lens portion 32 has the lens 23 having cross-sectional shapes that are different at the first position P1 and the second position P2 in the extension direction ED, and/or the thickness T32 changes along the extension direction ED of the lens 23, and thus the appearance of light becomes more complicated, and the designability enhances more reliably. For example, in a case in which the first observation point is a position facing the first position P1, and a focal position that is observed from the first observation point is on the interface between the sheet 31 and the image-forming portion 33 in the first position P1, the outline, tint, and/or the like of an image at the first position P1 are clearly observed from the first observation point, and the outline, tint, and/or the like of an image at the second position P2 are less clearly observed than the image at the first position P1. In addition, according to this example, the cross-sectional shape of the lens 23 continuously changes from the first position P1 toward the second position P2. Therefore, the definition continuously changes from the first position P1 toward the second position P2. Therefore, the curve shape of the decorative member 10 works more reliably, and a sense of perspective (a sense of depth or a sense of three-dimensions) observed from one random observation point is more reliably felt. In addition, during the movement of the observation point, in association with the sense of perspective (the sense of depth or the sense of three-dimensions), a sense of a motion picture or a sense of a residual image is emphasized or a change in tone becomes complicated, whereby the designability enhances. Furthermore, in an environment of a low light intensity, for example, at night, the texture can be felt, and thus the designability enhances.

Meanwhile, in a case in which the second observation point is a position facing the second position P2, and a focal position that is observed from the second observation point is on the interface between the sheet 31 and the image-forming portion 33 in the second position P2, the outline, tint, and/or the like of the image at the second position P2 are clearly observed from the second observation point, and the outline, tint, and/or the like of the image at the first position P1 are less clearly observed than the image at the second position P2. Therefore, the focal position continuously changes from the first position P1 to the second position P2 in association of the movement of the observation point from the first observation point to the second observation point. As a result, similar to the case in which the first observation point is the position facing the first position P1, and the focal position that is observed from the first observation point is on the interface between the sheet 31 and the image-forming portion 33 in the first position P1, the image on the print layer 35 is observed as more colorful light.

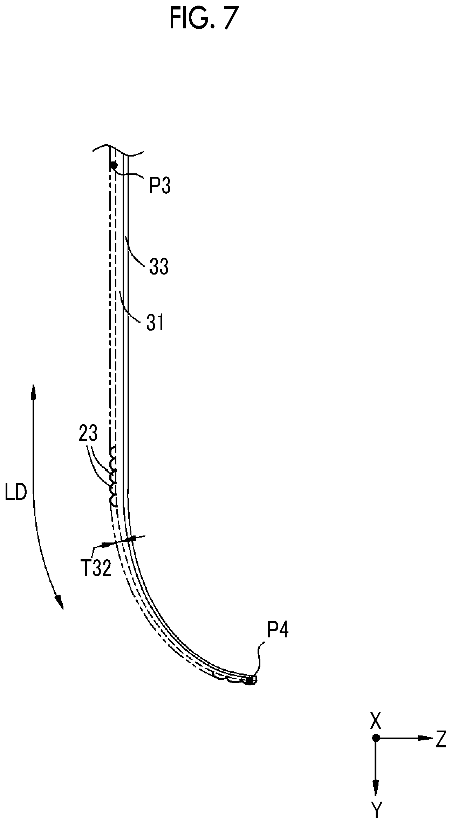

The curvature of the sheet 31 preferably changes along the array direction LD of the plurality of lenses 23, and, in the present embodiment, the curvature changes along the array direction. Therefore, as illustrated in Fig. 7, the curvature of the decorative member 10 also changes along the array direction LD of the plurality of lenses 23 as a whole. Meanwhile, the decorative member 10 of this example is symmetric with respect to the center in the right and left direction Y, and thus, in Fig. 7, only the right half in the right and left direction Y is illustrated. As illustrated in Fig. 7, the curvatures of the sheet 31 and the decorative member 10 continuously increase gradually from the center toward an end portion in the right and left direction Y. Therefore, the appearance of light by the movement of a view becomes more complicated, and the designability further enhances. Meanwhile, in Fig. 7, in order to prevent the drawing from becoming complicated, a hatching indicating a cross section is not provided.

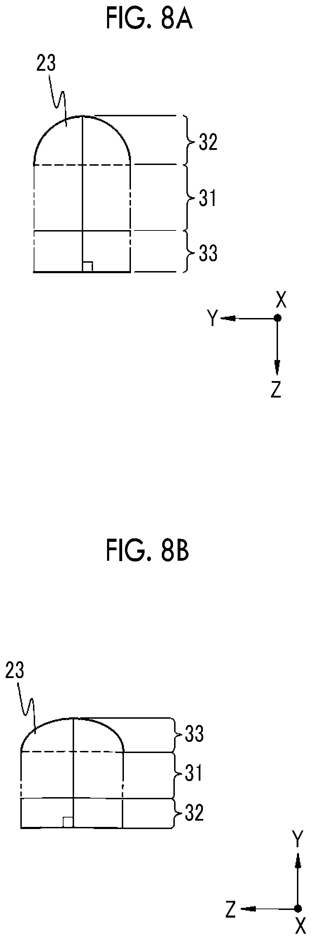

In addition, in the lens portion 32, the shape of the cross section of a lens 23 at a third position and the shape of the cross section of a lens 23 at a fourth position in the array direction LD of the plurality of lenses 23 are preferably different from each other as illustrated in Fig. 7. Here, the center in the right and left direction Y in Fig. 7 is considered as the third position P3, and the fourth position P4 is provided at a lower side end portion. When the cross section of the lens 23 at the third position P3 (refer to Fig. 8A) is compared with the cross section of the lens 23 at the fourth position P4 (refer to Fig. 8B), the width of the lens 23 becomes smaller, and a shape having a higher height is formed. In addition, the shape of the cross section of the lens 23 continuously changes from the third position P3 toward the fourth position P4. Meanwhile, there is a case in which the shapes of the respective cross sections at the third position P3 and the fourth position P4 are switched depending on the conditions for producing the decorative member 10 by thermal shaping described below.

The thickness T32 of the lens portion 32 (refer to Fig. 3) preferably changes along the array direction LD of the plurality of lenses 23, and, in the present embodiment, the thickness changes along the array direction. As illustrated in Fig. 7, the thickness T32 of the lens portion 32 continuously decreases gradually from the center toward the end portion in the right and left direction Y.

As described above, the lens portion 32 has the plurality of lenses 23 having mutually different shapes in the cross section at the third position P3 and the fourth position P4 in the array direction LD, and/or the thickness T32 changes along the array direction LD of the plurality of lenses 23, and thus the appearance of light becomes more complicated, and the designability enhances more reliably. For example, in a case in which the first observation point is a position facing the third position P3, and the focal position that is observed from the first observation point is on the interface between the sheet 31 and the image-forming portion 33 in the third position P3, the outline, tint, and/or the like of an image at the third position P3 are clearly observed from the first observation point, and the outline, tint, and/or the like of an image at the fourth position P4 are less clearly observed than the image at the third position P3. In addition, in this example, the cross-sectional shape of the lens 23 changes little by little from the third position P3 toward the fourth position P4. Therefore, the definition continuously changes from the third position P3 toward the fourth position P4. Therefore, the curve shape of the decorative member 10 works more reliably, and a sense of perspective (a sense of depth or a sense of three-dimensions) observed from one random observation point is more reliably felt. In addition, during the movement of the observation point, the above-described action is also further emphasized. Furthermore, in an environment of a low light intensity, for example, at night, the texture can be felt, and thus the designability enhances.

Meanwhile, in a case in which the second observation point is a position facing the fourth position P4, and a focal position that is observed from the second observation point is on the interface between the sheet 31 and the image-forming portion 33 in the fourth position P4, the outline, tint, and/or the like of the image at the fourth position P4 are clearly observed from the second observation point, and the outline, tint, and/or the like of the image at the third position P3 are less clearly observed than the image at the fourth position P4. Therefore, the focal position continuously changes from the third position P3 to the fourth position P4 in association of the movement of the observation point from the first observation point to the second observation point. As a result, similar to the case in which the first observation point is the position facing the third position P3, and the focal position that is observed from the first observation point is on the interface between the sheet 31 and the image-forming portion 33 in the third position P3, the image on the print layer 35 is observed as more colorful light.

As described above, the curvature, the cross-sectional shapes of the lenses 23, the thickness T32, and/or the like change in the array direction in which the decorative member curves and/or in the extension direction ED in which the decorative member curves, and thus the decorative member 10 has the following actions depending on the first image 37 and the second image 38 constituting the print layer 35. In a case in which the first image 37 and the second image 38 the same image, the tone is emphasized as, for example, richness, and this is felt as the sense of perspective (the sense of depth or the sense of three-dimensions). In addition, in a case in which the first image 37 and the second image 38 are mutually different images for a variable view, during the movement of the observation point, in association with the sense of perspective (the sense of depth or the sense of three-dimensions), the sense of a motion picture or the sense of a residual image is emphasized or a change in tone becomes complicated, whereby the designability enhances. In addition, in a case in which the first image 37 and the second image 38 are formed using mutually different colors, there is a case in which both images are observed in a state in which the different colors are mixed together during at least any one of observation at a random observation point or the movement of the observation point. In addition, the respective actions described above that are obtained by the movement of the observation point depending on the range of the portion curving in the extension direction ED and the curvature in the range thereof are felt as a stepwise change in some cases or a continuous change in other cases, and thus the designability is rich.

The decorative member 10 can be produced from the molding article 39 which has the same layer structure and is a planar sheet (refer to Fig. 9). The same layer structure refers to a structure comprising a sheet that has a light-transmitting property (not illustrated), a lens portion that is provided on one sheet surface of the sheet and is formed of protruding lenses (not illustrated), and an image-forming portion which is provided on the other sheet surface of the sheet and on which an image is formed. However, the thickness of the lens portion and the shapes of the plurality of lenses do not need to be different from one another as in the decorative member 10 and may be uniform respectively.

A portion that is constituted of the lens portion and the sheet of the molding article 39 in this example is provided with an aspect of a so-called lenticular sheet. In the present embodiment, the pitch between the lenses is set to, for example, 0.127 mm, but is not limited thereto, and is preferably in a range of 0.025 mm or more and 5.0 mm or less. Meanwhile, this pitch also refers to, similar to the pitch P23, the distance between the apexes of the lenses.

The respective materials of the sheet and the image-forming portion of the molding article 39 are the same as the respective materials of the sheet 31 and the image-forming portion 33. The lens portion includes a thermosetting compound that generates the above-described thermosetting polymer by heating and/or the above-described photocurable polymer. In addition, the thermosetting compound is in a so-called semi-cured state in which the thermosetting compound is not fully cured. Examples of the thermosetting compound include tricyclodecane dimethanol diacrylate (hereinafter, referred to as ADCP), bisphenol A (hereinafter, referred to as Bis-A), and a phenolic resin, and, in the present embodiment, ADCP is used.

A method for producing the decorative member 10 will be described below. The decorative member 10 is produced by a molding article-producing step of producing the molding article 39 and a shaping step of shaping the molding article 39 to the decorative member 10. As illustrated in Fig. 9, a molding article-producing device 40 for producing the molding article 39 is constituted of a sender 41, a coater 42, a lens-forming unit 45, a winder 46, and the like.

The sender 41 is a member for supplying a film 51 in which a long and light-transmitting sheet member that becomes a sheet of the molding article 39 and a forming member that becomes an image-forming portion are laminated together in the thickness direction to the lens-forming unit 45. In this example, the film 51 is in a state of being wound in a roll shape, the film roll (illustrated in the drawing) having the film 51 wound in a roll shape is set in the sender 41, and the film 51 is sent from this film roll. The film 51 functions as a support for a coated film 52 which will be formed using the coater 42. Meanwhile, a driving roller (not illustrated) that rotates in the circumferential direction is disposed between the lens-forming unit 45 and the winder 46. The film 51 is wound around this driving roller, and the film 51 is transported toward the downstream of molding article-producing device 40 by the rotation of the driving roller.

The coater 42 is a member for forming the coated film 52 on the film 51. The coated film 52 is turned into a lens portion in the molding article 39 using the lens-forming unit 45. The coater 42 continuously outpours a coating fluid 53 being supplied. The coating fluid 53 is outpoured toward the film 51 that travels in the longitudinal direction, and thus the coated film 52 is formed on one film surface of the film 51. The film 51 on which the coated film 52 is formed is guided to the lens-forming unit 45.

The coating fluid 53 includes a thermosetting compound. In the present embodiment, this thermosetting compound is heated using a heater 57 described below, thereby generating the thermosetting compound that is included in the lens portion in the molding article 39. In the present embodiment, the molding article 39 including a photocurable polymer in the lens portion is produced, and thus a photocurable compound is also added to the coating fluid 53. The photocurable compound in the present embodiment is ADCP described above, but is not limited thereto, and may be any one of a monomer, an oligomer, or a polymer. Meanwhile, depending on the thermosetting compound and the photocurable compound to be used, the coating fluid 53 may include solvents therefor.

The lens-forming unit 45 is a member for forming (imparting a form) the respective lenses in the molding article 39. The lens-forming unit 45 is constituted of a form-imparting machine 56, the heater 57, a light source 58, and the like.

The form-imparting machine 56 is a member for forming a protruding lens. The form-imparting machine 56 comprises a first support roller 61, a second support roller 62, and a shape-imparting roller 63 as a shape-imparting member. The first support roller 61, the second support roller 62, and the shape-imparting roller 63 are disposed in a state in which the rotation axes are set to be along the width direction of the film 51, that is, the paper depth direction in Fig. 5. From the upstream side, the first support roller 61, the shape-imparting roller 63, and the second support roller 62 are disposed.

In this example, the first support roller 61 and the second support roller 62 are disposed on a side of the transportation path of the film 51 opposite to the coated film 52, and the film 51 is wound around the circumferential surfaces thereof. The first support roller 61 and the second support roller 62 rotate following the transportation of the film 51. The first support roller 61 and the second support roller 62 may be rotated using a motor in synchronization with the transportation of the film 51.

The shape-imparting roller 63 is provided in a state in which the first support roller 61 and the second support roller 62 face each other and is disposed on the coated film 52 side of the transportation path of the film 51. The shape-imparting roller 63 continuously forms the lens portion having the lens surfaces that protrude in a semicircular column shape in the coated film 52 in synchronization with the first support roller 61 and the second support roller 62. That is, the first support roller 61 and the second support roller 62 function as a support member that supports the film 51 and also functions as a shape-imparting member for forming the protruding lens surface.

On the circumferential surface of the shape-imparting roller 63, a plurality of concave portions 63a having a semicircular column-shaped cross section is formed in order to form the lens portion. The respective concave portions 63a extend in the axial direction of the shape-imparting roller 63, that is, the width direction of the film 51, and the plurality of concave portions 63a is formed side by side along the circumferential direction of the shape-imparting roller 63. The shape-imparting roller 63 is rotated using a motor 66 in a state in which the film 51 is sandwiched between the first support roller 61 and the shape-imparting roller or between the second support roller 62 and the shape-imparting roller. The rotation direction of the shape-imparting roller 63 is the direction in which the film 51 is transported (the counterclockwise direction in Fig. 5). The shape-imparting roller 63 presses the film 51 being transported from the coated film 52 side on the first support roller 61, on the second support roller 62, and between the first support roller 61 and the second support roller 62 respectively so as to transfer the shape of the concave portion 63a to the coated film 52 and forms the lens portion. Meanwhile, the respective concave portions 63a extend in the circumferential direction of the shape-imparting roller, that is, the longitudinal direction of the film 51, and the plurality of concave portions 63a may also be formed side by side in the axial direction of the shape-imparting roller.

The shape of the concave portion 63a in the shape-imparting roller 63 is determined depending on the shape of a lens to be formed.

To the shape-imparting roller 63, a pressure adjuster 67 is preferably provided as in the present embodiment. The pressure adjuster 67 is a member for adjusting the pressing force of the shape-imparting roller 63 to the coated film 52 during the transfer of the shape of the concave portion 63a. The pressure adjuster 67 adjusts the pressing force, thereby more reliably forming the lens portion.

The heater 57 cures the thermosetting compound in the formed lens portion, but puts the thermosetting compound into a semi-cured state so that the thermosetting compound is capable of further proceeding with curing in the following steps. The heater 57 is disposed so as to surround a transportation path in the downstream of the form-imparting machine 56 and supplies heated gas, for example, the air to the inside. The thermosetting compound in the lens portion formed using the form-imparting machine 56 is passed through the heater 57, whereby the curing of the thermosetting compound in the lens portion formed using the form-imparting machine 56 proceeds. The presence and absence of the remaining of the thermosetting compound and the remaining percentage can be confirmed and quantitatively determined by comparing before curing and after curing through a spectrum analysis of Fourier transform infrared spectrometer (FT-IR). In the present embodiment, the peak intensities at 810 cm⁻¹ and 1,635 cm⁻¹ before curing and after curing are compared with each other respectively, thereby confirming and quantitatively determining the presence and absence of the remaining of the thermosetting compound and the remaining percentage. The peak at 810 cm⁻¹ corresponds to the C-H (a single bond between carbon and hydrogen) vending of a vinyl group, and the peak at 1,635 cm⁻¹ corresponds to the C=C (a double bond between carbon and carbon) stretching and vibration of a vinyl group.

The internal temperature of the heater 57 and the time for passing the thermosetting compound through the heater 57 are adjusted depending on the kind of the thermosetting compound being used, thereby adjusting the remaining amount or remaining percentage of the thermosetting compound. The internal temperature of the heater 57, that is, the temperature of gas that is sent into the inside is preferably in a range of 100°C or higher and 200°C or lower and, in the present embodiment, set to 160°C. The time for passing the thermosetting compound through the heater 57, that is, the heating treatment time is preferably in a range of 10 seconds or longer and 200 seconds or shorter and, in the present embodiment, set to 30 seconds. Therefore, in the present embodiment, the molding article 39 is obtained in a state in which the first thermosetting compound is included.

At least any one of the heater 57 or, for example, a variety of heating devices such as a radiation-type heater (not illustrated) and/or a blower (not illustrated) that sends heated gas may be used. Meanwhile, in addition to the heater 57 provided in the downstream of the form-imparting machine 56, a variety of heating devices as described above may be provided at a position facing the first support roller 61 in the upstream of the shape-imparting roller 63, a position on the film 51 side facing the shape-imparting roller 63, a position facing the second support roller 62 in the downstream of the shape-imparting roller 63, and the like. In a case in which a variety of heating devices as described above are provided at any of the above-described positions, the heater 57 provided in the downstream of the form-imparting machine 56 may not be used.

The light source 58 is a member for curing the photocurable compound and generating a photocurable polymer. The light source 58 is provided in a state of facing the shape-imparting roller 63 and discharges ultraviolet rays. During the passing of the film 51 in a state of being wound around the shape-imparting roller 63, light from the light source 58 is radiated on the coated film 52 through the film 51, and the photocurable compound cures, thereby generating a photocurable polymer.

The kind of light that is discharged by the light source 58 and the output at which light is discharged depend on the kind of the photocurable compound. The light source 58 and/or other light sources (not illustrated) may be provided. In a case in which other light sources are used in addition to the light source 58, other light sources can be provided at a position facing the first support roller 61 in the upstream of the shape-imparting roller 63, a position on the film 51 side facing the shape-imparting roller 63, a position facing the second support roller 62 in the downstream of the shape-imparting roller 63, and the like.

The winder 46 winds the obtained long molding article 39 around a winding core (not illustrated) in a roll shape. The molding article 39 in a roll shape is cut to a sheet shape using a cutter before being provided to a shaping device 70 described below. Therefore, in the molding article-producing device 40, a cutter (not illustrated) that cuts the long molding article 39 to a sheet shape may be provided at the position of the winder 46 without using the winder 46. In addition, in the case of producing a molding article not comprising the sheet, a peeler (not illustrated) that peels the sheet portion off from a part of the lens portion may be provided between the lens-forming unit 45 and the winder 46, thereby peeling the part of the sheet portion. Meanwhile, in this example, the shape-imparting roller 63 is used as the shape-imparting member, but the shape-imparting member is not limited thereto. For example, in the case of producing a sheet-type molding article or the like, for example, a plate-shaped shape-imparting member having the concave portions 63a formed on the surface may be used.

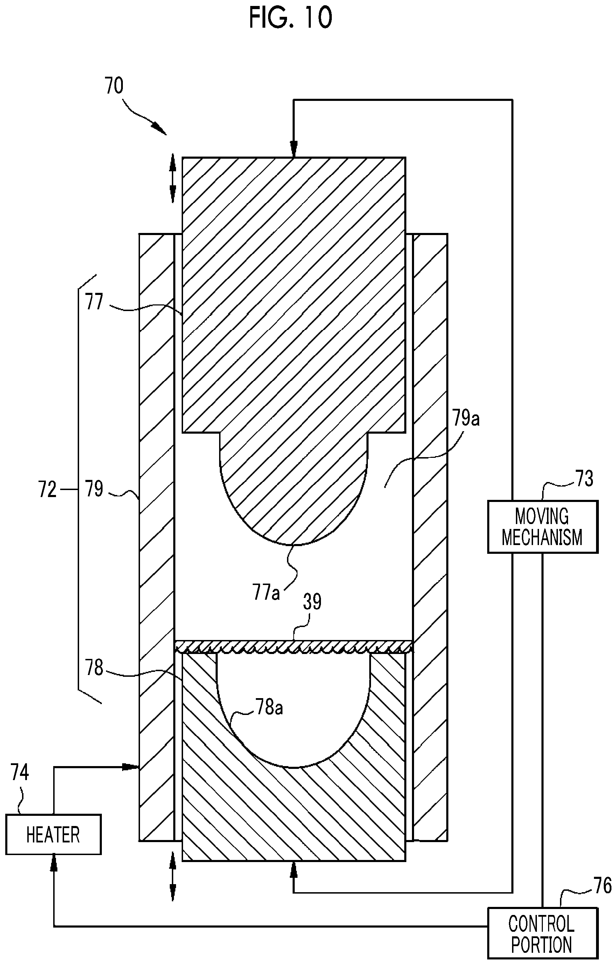

The shaping device 70 illustrated in Fig. 10 is a member for shaping the sheet-shaped molding article 39 and producing the decorative member 10. The shaping device 70 comprises a die unit 72, a moving mechanism 73, a heater 74, and a control portion 76 and carries out a thermal shaping treatment under heating. However, the shaping method is not limited to thermal shaping, and, for example, a method such as vacuum shaping or vacuum pressure shaping may be used.

The die unit 72 has a first die 77, a second die 78, and a trunk 79. The trunk 79 has a rectangular cross-sectional shape in the horizontal direction in Fig. 6 which is orthogonal to a compression direction. The trunk 79 has a guide hole 79a that penetrates in the compression direction by the first die 77 and the second die 78. Meanwhile, the compression direction refers to the vertical direction in Fig. 10. The first die 77 and the second die 78 are guided to the inner wall of the guide hole 79a and are movable in the compression direction. The first die 77 and the second die 78 carry out the compression shaping of the molding article 39 in the trunk 79 and thus shape the decorative member 10. The molding article 39 is formed in a shape suitable to the compression shaping of the decorative member 10.

In the first die 77 and the second die 78, transfer surfaces 77a and 78a for forming a second lens surface 11B and a first lens surface 11A having the curve shape of the decorative member 10 respectively are formed on facing surfaces that face each other. The transfer surface 77a of the first die 77 is formed in a convex form, and the transfer surface 78a of the second die 78 is formed in a concave form.

The moving mechanism 73 moves the first die 77 and the second die 78 respectively in a direction in which the distance therebetween increases and decreases. In addition, in a case in which the molding article 39 is stored in the trunk 79, the first die 77 is moved upwards, thereby being evacuated from the trunk 79. The heater 74 heats the die unit 72, thereby heating the molding article 39 in the trunk 79. The moving mechanism 73 and the heater 74 are controlled using the control portion 76. The control portion 76 controls the amount of heat generated from the heater 74, thereby adjusting the temperature in the trunk 79.

The decorative member 10 is an example of a three-dimensional molded article having a curve shape protruding in one direction, but may be a three-dimensional molded article having a shape curved in a plurality of directions. That is, the molding article 39 can also be shaped into a three-dimensional molded article having a shape curved in a plurality of directions, and, in order for that, the die unit 72 in the shaping device 70 needs to be replaced by a die unit tailored to the curve shape of a target three-dimensional molded article.

### [Examples]

### [Example 1] to [Example 6]

Six kinds of molding articles 39 were made using the molding article-producing device 40. Decorative members 10 were produced respectively from the respective molding articles 39 obtained using the shaping device 70 and were considered as Examples 1 to 6. The six kinds of molding articles 39 were different from one another in terms of the pitch between the lenses. The pitches between the lenses of the respective molding articles 39 are shown in the column "pitch between lenses of molding article" in Table 1. At the time of turning the respective molding articles 39 into the decorative members 10, the stretching percentages of portions that were most stretched in the array direction LD were 100%. In the respective decorative members 10, the widths W23 of the lenses 23 were not constant and changed depending on portions. The widths W23 of the lenses 23 in the respective decorative members 10 are shown in the column "width of lens in decorative member" in Table 1. Meanwhile, numerical ranges in the column "width of lens in decorative member" include numerical values before and after "to". On the image-forming portion 33, the first image 37 and the second image 38 for a variable view were formed.

For the respective decorative members 10 obtained, the clearness of the images and the switching property of the images were evaluated. Individual evaluation methods and evaluation standards are as described below, and the evaluation results are shown in Table 1.

### 1. Clearness of images

The decorative member 10 was visually observed, and up to what detail of the images could be observed was evaluated. The evaluation standards are as described below. The ranking S is a level used as the standard of the evaluation. This level is fail. The rankings A to C are pass. In a case in which the detail was more clearly observed than in the ranking S, the clearness was evaluated as any of A to C, and these pass levels were divided into three steps.
A; The detail was extremely clear.
B; As a whole, the detail was clearer than in the ranking C, and there was a part in which the detail was approximately as extremely clear as in the ranking A.
C; The detail was clearer than in the ranking S.
S; A level observed from a decorative member obtained in Comparative Example 1 described below.

### 2. Switching property of images

The decorative member 10 was visually observed while being moved from the first observation point to the second observation point. The continuity (smoothness) of the switching property between the observed first image 37 and the observed second image 38 was evaluated, and, as the switching was smoother, the unnatural feeling was evaluated to further decrease, and the switching between the images was evaluated to be superior. The evaluation standards are as described below. The ranking S is a level used as the standard of the evaluation, and this level is fail. The rankings A to C are pass. In a case in which the detail was more clearly observed than in the ranking S, the switching property was evaluated as any of A to C, and these pass levels were divided into three steps.
A; During the movement from the first observation point to the second observation point, the switching of the first image 37 and the second image 38 was extremely continuous (smooth), and there was no unnatural feeling.
B; During the movement from the first observation point to the second observation point, the switching of the first image 37 and the second image 38 was continuous, and there was seldom an unnatural feeling.
C; During the movement from the first observation point to the second observation point, there was a part in which the switching of the first image 37 and the second image 38 was discontinuous, but the unnatural feeling was weaker than in the ranking S.
S; A level observed from the decorative member obtained in Comparative Example 1 described below, and, specifically, during the movement from the first observation point to the second observation point, the switching of the first image 37 and the second image 38 was observed to be discontinuous throughout the images, and there was an unnatural feeling.

**[Table 1]**

| | Pitch between lenses in molding article | Width of lens in decorative member (µm) | Clearness of image | Switching property of images |
|---|---|---|---|---|
| Example 1 | 50 LPI | 508.0 to 1,016.0 | C | C |
| Example 2 | 100 LPI | 254.0 to 508.0 | B | B |
| Example 3 | 200 LPI | 127.0 to 254.0 | A | A |
| Example 4 | 300 LPI | 84.7 to 169.3 | A | A |
| Example 5 | 500 LPI | 50.8 to 101.6 | A | A |
| Example 6 | 1,000 LPI | 25.4 to 50.8 | A | A |
| Comparative Example 1 | 30 LPI | 847.0 to 1,693.0 | S | S |

### [Comparative Example 1]

A molding article 39 was made using the molding article-producing device 40. A decorative member 10 was produced from the obtained molding article 39 using the shaping device 70 and was considered as Comparative Example 1. The pitch between the lenses of the molding articles 39 is shown in the column "pitch between lenses of molding article" in Table 1. At the time of turning the molding article 39 into the decorative member 10 using the shaping device 70, the stretching percentage of a portion that was most stretched in the array direction LD was 100%. In the decorative member, the width of the lens was not constant and changed depending on portions. The width of the lens in the decorative member is shown in the column "width of lens in decorative member" in Table 1.

For the obtained decorative member, the clearness of images and the switching property of the images were evaluated using the same method as in the examples, and individual evaluation results obtained were set as the evaluation level S.

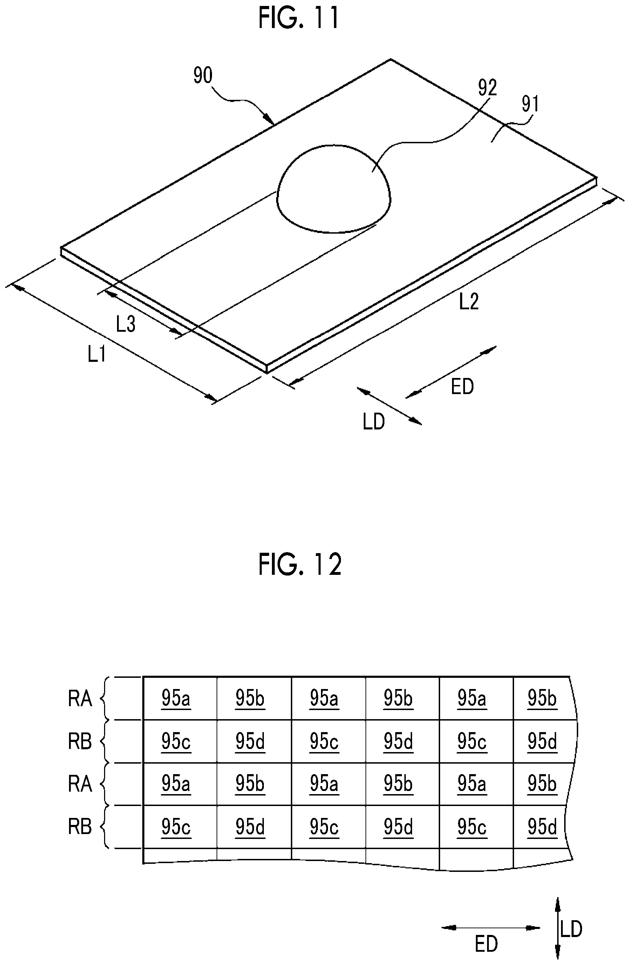

Hereinafter, on the basis of the above-described results, the action effects will be verified. A decorative member 90 illustrated in Fig. 11 is formed in a sheet shape and comprises a rectangular plane portion 91 and a dome-shaped curved surface portion 92 formed at the center of the plane portion 91. A length L1 of a short side of the plane portion 91 is 120 mm, and a length L2 of a long side is 150 mm. The curved surface portion 92 is formed as a convex portion that protrudes upwards in Fig. 11. The curved surface portion 92 has a semispherical shape having a constant radius and has a diameter L3 of 40 mm.

The decorative member 90 is made by thermally shaping a rectangular sheet-shaped molding article 39 having a length of a short side of 120 mm and a length of a long side of 150 mm. Therefore, the decorative member 90 has the same layer structure as the decorative member 10. However, an image that is formed on the print layer 35 is different from the image in the decorative member 10 as described below using a separate drawing. In Fig. 11, the lenses 23 (refer to Fig. 3) are not illustrated in order to prevent the drawing from becoming complicated, but the lens portion 32 (refer to Fig. 3) is located on the upper side in Fig. 11, and the image-forming portion 33 (refer to Fig. 3) is located on the lower side in Fig. 11. The array direction LD is a short side direction of the plane portion 91, and the extension direction ED is a long side direction of the plane portion 91.

The image that is formed on the print layer 35 in the decorative member 90 is constituted of four kinds of rectangular image areas (hereinafter, referred to as the rectangular image areas) 95a, 95b, 95c, and 95d as illustrated in Fig. 12. The rectangular image areas 95a, 95b, 95c, and 95d are squarely arrayed. The rectangular image areas 95a and the rectangular image areas 95b are alternately disposed in the extension direction ED, and, similarly, the rectangular image areas 95c and the rectangular image areas 95d are alternately disposed in the extension direction ED. In addition, the rectangular image areas 95a and the rectangular image areas 95c are alternately disposed in the array direction LD, and, similarly, the rectangular image areas 95b and the rectangular image areas 95d are alternately disposed in the array direction LD. Meanwhile, in the following description, in the case of not being differentiated from one another, the rectangular image areas 95a, 95b, 95c, and 95d will be referred to as the rectangular image areas 95.

An image row RA made up of the rectangular image areas 95a and the rectangular image areas 95b that are arrayed in the extension direction ED and an image row RB made up of the rectangular image areas 95c and the rectangular image areas 95d are disposed so as to correspond a single lens 23 in a state of forming a pair. That is, one of the image row RA and the image row RB corresponds to the linear image areas 37a, 37b, 37c, ···, and the other corresponds to the linear image areas 38a, 38b, 38c, ···. Therefore, the total of the widths of the image row RA and the image row RB is the same as the width W23 of the lens 23.

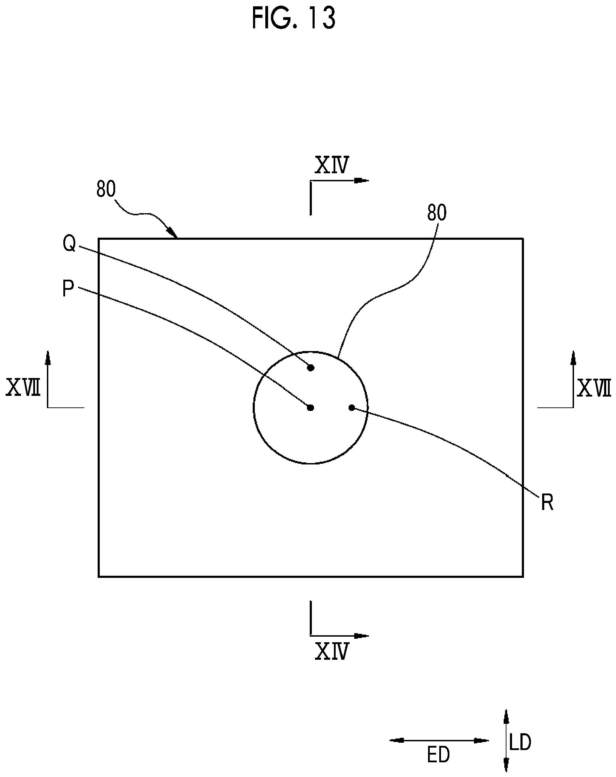

Here, in the case of seeing the decorative member 90 from the lens portion 32 (refer to Fig. 3) side as illustrated in Fig. 13, the center of the curved surface portion 92 is considered as a point P. In addition, in the curved surface portion 92, a point Q is provided on a straight line that passes through the point P and extends in the array direction LD, and a point R is provided on a straight line that passes through the point P and extends in the extension direction ED.

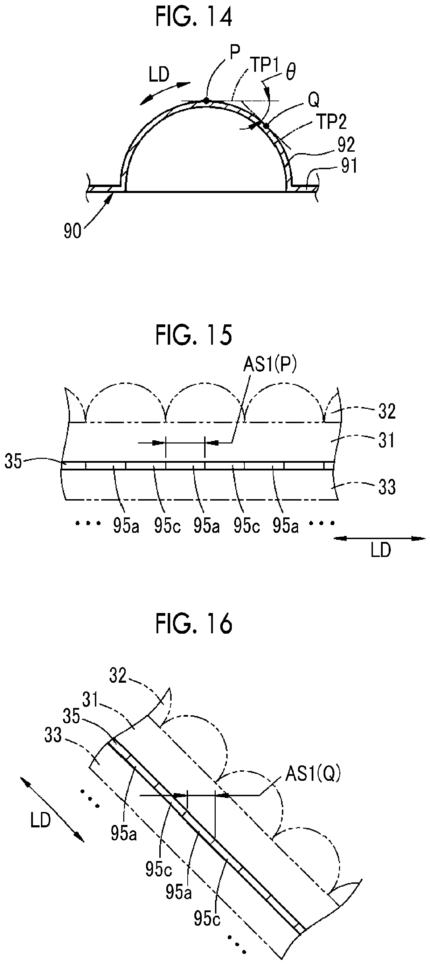

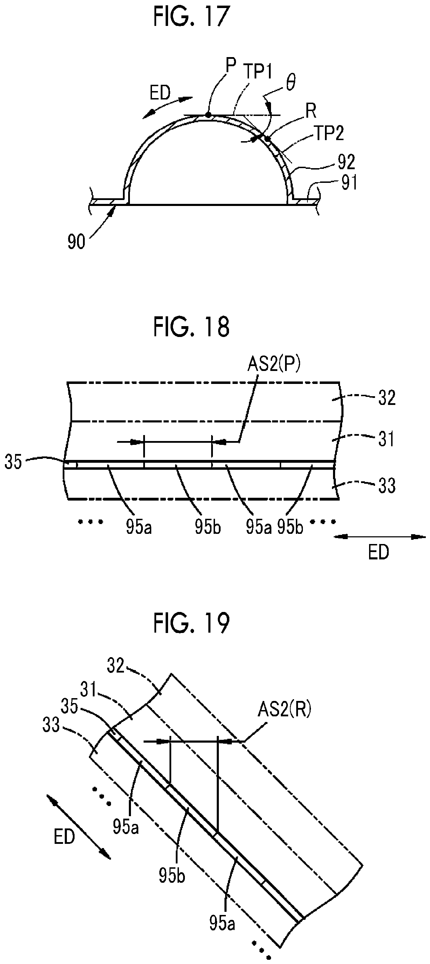

As illustrated in Fig. 14, in a case in which a tangent plane at the point P on the curved surface portion 92 is considered as a first tangent plane TP1, the point Q is a contact point between a second tangent plane TP2 that forms an angle θ (here, 0°<θ≤90°) of 45° with the first tangent plane TP1 and the curved surface portion 92. Similarly, the point R is also a contact point between the second tangent plane TP2 and the curved surface portion 92 (refer to Fig. 17). As described above, the point Q and the point R are points on the curved surface portion 92 at which the direction of the observation point is inclined 45° with respect to the normal line. Meanwhile, the lens 23 is extremely smaller compared with the curved surface portion 92, and thus the first tangent plane TP1 and the second tangent plane TP2 are specified on a curved surface (an imaginary curved surface obtained by connecting the apexes of the respective lenses 23 on the first lens surface) as the entire curved surface portion 92 by ignoring a curved surface forming the first lens surface of the lenses 23.

The decorative member 90 is observed from 600 mm above the point P in Fig. 14. "600 mm" is a distance set as remoteness far enough to consider, in the case of seeing the point P and the point Q from one observation point, a straight line connecting the observation point and the point P and a straight line connecting the observation point and the point Q to be parallel to each other.

Here, the width of the rectangular image area 95 in the array direction LD which is expected to be observed from the observation point is considered as an expected width AS1. Meanwhile, in the case of differentiating the expected width AS1 of the rectangular image area 95 at the point P and the expected width AS1 of the rectangular image area 95 at the point Q, the former width is represented by AS1(P), and the latter width is represented by AS1(Q). As illustrated in Fig. 15, the rectangular image areas 95a, 95c, 95a, ··· at the point P are considered to be arrayed in a direction perpendicular to the direction toward the observation point. In contrast, the rectangular image areas 95a, 95c, 95a, ··· at the point Q are considered to be arrayed in a direction 45° inclined with respect to the array direction of the rectangular image areas 95a, 95c, 95a, ··· at the point P as illustrated in Fig. 16. Therefore, each of the expected widths AS1(Q) of the rectangular image areas 95a, 95c, 95a, ··· at the point Q is cos 45° times (=1/2^{1/2} times) each of the expected widths AS1(P) of the rectangular image areas 95a, 95c, 95a, ··· at the point P and is narrower than the expected width AS1(P) at the point P (which is considered as an action A1). Meanwhile, in Fig. 15 and Fig. 16, the rectangular image areas 95a, 95c, 95a, ··· are drawn and described, but the rectangular image areas 95b, 95d, 95b, ··· may be drawn and described.

In addition, in the case of observing the point P and the point Q from the above-described observation point, the point P is observed from right above (a direction perpendicularly away from the rectangular image area 95), and the point Q is observed from inclined above (a direction away from the rectangular image area 95 with a slope). Therefore, in the case of observing the point P, among the rectangular image areas 95, a point right below the point P (among the rectangular image areas 95, a point intersecting a perpendicular line from the point P and a point at which the optical axis of the lens 23 in the lens portion 32 and the rectangular image area 95 intersect each other) is viewed. On the other hand, in the case of observing the point Q, a point deviating from right below the point Q is observed. Furthermore, the lens portion 32 and the sheet 31 have refractive indexes that are different from that of the outside (the atmosphere filling a space in which the decorative member 90 is disposed), and thus, in the case of being observed from inclined above such as the point Q, a position being observed also deviates due to the refraction of light by the lens portion 32 and the sheet 31. As described above, from the point P, a point right below is observed; however, from the point Q, a point deviating from right below is observed (which is considered as an action A2).

Furthermore, in the case of moving the observation point along the array direction LD in the plane portion 91, due to the difference between the expected width AS1(P) at the point P and the expected width AS1(Q) at the point Q, the cycle of the switching of images being observed differs at the point P and the point Q. Specifically, the cycle of the switching at the point Q is cos 45° times (=1/2^{1/2} times) the cycle of the switching at the point P and is shorter than the cycle of the switching at the point P (which is considered as an action A3).

The decorative member 90 is also observed in the same manner in the extension direction ED. That is, the decorative member 90 is observed from 600 mm above the point P in Fig. 17. "600 mm" is a distance set as remoteness far enough to consider, in the case of seeing the point P and the point R from one observation point, a straight line connecting the observation point and the point P and a straight line connecting the observation point and the point R to be parallel to each other.

Here, the width of the rectangular image area 95 in the extension direction ED which is expected to be observed from the observation point is considered as an expected width AS2. Meanwhile, in the case of differentiating the expected width AS2 of the rectangular image area 95 at the point P and the expected width AS2 of the rectangular image area 95 at the point R, the former width is represented by AS2(P), and the latter width is represented by AS2(R). As illustrated in Fig. 18, the rectangular image areas 95a, 95b, 95a, ··· at the point P are considered to be arrayed in a direction perpendicular to the direction toward the observation point. In contrast, the rectangular image areas 95a, 95b, 95a, ··· at the point R are considered to be arrayed in a direction 45° inclined with respect to the array direction of the rectangular image areas 95a, 95b, 95a, ··· at the point P as illustrated in Fig. 19. Therefore, each of the expected widths AS2(R) of the rectangular image areas 95a, 95b, 95a, ··· at the point R is cos 45° times (=1/2^{1/2} times) each of the expected widths AS2(P) of the rectangular image areas 95a, 95b, 95a, ··· at the point P and is narrower than the expected width AS2(P) at the point P (which is considered as an action B1). Meanwhile, in Fig. 18 and Fig. 19, the image row RA is drawn and described, but the image row RB may be drawn and described.

In addition, in the case of observing the point P and the point R from the above-described observation point, the point P is observed from right above, and the point R is observed from inclined above. Therefore, in the case of observing the point P, among the rectangular image areas 95, a point right below the point P is viewed. On the other hand, in the case of observing the point R, a point deviating from right below the point R is observed. Furthermore, a position being observed also deviates due to the refraction of light by the lens portion 32 and the sheet 31. As described above, from the point P, a point right below is observed; however, from the point R, a point deviating from right below is observed (which is considered as an action B2).

Due to the combination of the above-described actions A1 to A3, B1, and B2, in the decorative member 90, the appearance of light becomes complicated, and excellent designability is developed. Meanwhile, the respective actions described above are identical in any case in which an image being formed by the rectangular image areas 95a to 95d is an image for a variable view or an image for a three-dimensional view. In addition, in the decorative member 90, in a case in which the thickness of the lens portion 32 differs depending on positions and/or a case in which the cross-sectional shape of the lens 23 differs depending on positions, in addition to the above-described actions A1 to A3, B1, and B2, the focal depth differs depending on positions due to the difference in the thickness and/or the cross-sectional shape, and thus the appearance of light becomes more variable. These actions attributed to the difference in the thickness and/or the cross-sectional shape are significant in any case in which the images on the print layer 35 are images that are identical to each other in terms of color, brightness, and glossiness (for example, the piano black or the like).

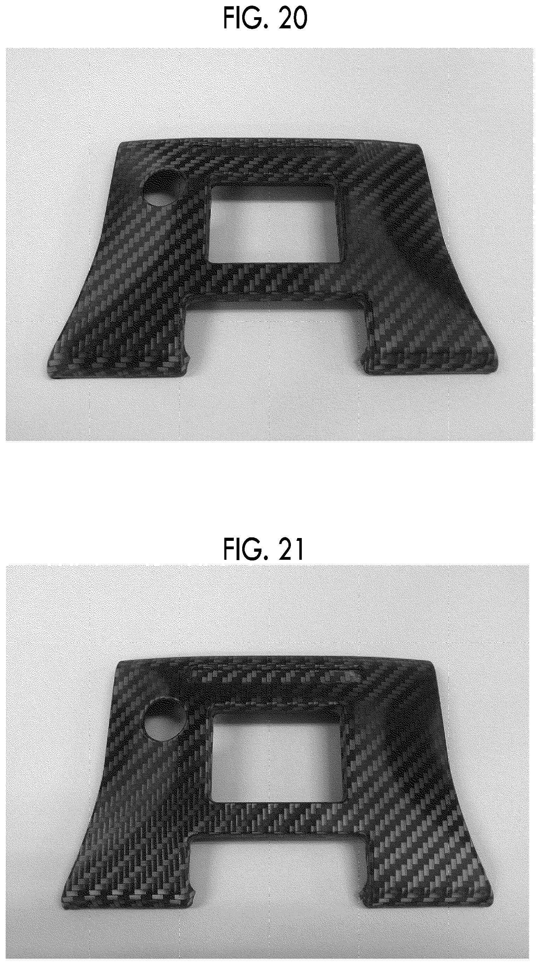

In addition, as at least any one of the pitch P23 between the lenses 23 or the widths of the linear image area and the rectangular image area in the array direction LD (hereinafter, referred to as the image pitch) decreases, the accuracy further improves, and the appearance of light becomes more variable. For example, photographs illustrated in Fig. 20 and Fig. 21 result from the observation of a decorative member in which, among the pitches P23 between the lenses 23, the smallest pitch P23 is 200 LPI, and mutually different observation points are observed from the photographs. In the example of the photographs, the width W23 of the lens 23 is equally divided into 12 parts, and an image for a variable view is formed on the print layer 35 using three linear image areas in which the above-described parts are allocated to 5:2:5. Meanwhile, in the case of ultraviolet (UV) offset printing, the minimum width in the current printing is 6 µm, and thus the maximum number of linear image areas and rectangular image areas becomes the number obtained by dividing the width W23 by 6 µm. Meanwhile, in the decorative member of Fig. 20 and Fig. 21, the maximum value of the height of the lens portion 32 is 38 µm, and the maximum value of the thickness of the sheet 31 is 139 µm. The maximum value of the height of the lens portion 32 is preferably equal to or less than the width W23 of the lens.

### Explanation of References

- 10, 90:: decorative member
- 10A:: front surface portion
- 10B:: side surface portion
- 11:: automobile
- 14:: dashboard
- 15:: steering wheel
- 16:: door panel
- 21:: dashboard material main body
- 22:: dashboard material
- 23:: lens
- 31:: sheet
- 31A:: front surface portion
- 31B:: side surface portion
- 31a:: first sheet surface
- 31b:: second sheet surface
- 32:: lens portion
- 33:: image-forming portion
- 35:: print layer
- 36:: support
- 37:: first image
- 37a, 37b, 37c, ···:: linear image area
- 38:: second image
- 38a, 38b, 38c, ···:: linear image area
- 39:: molding article
- 40:: molding article-producing device
- 41:: sender
- 42:: coater
- 45:: lens-forming unit
- 46:: winder
- 51:: film
- 52:: coated film
- 53:: coating fluid
- 56:: form-imparting machine
- 57:: heater
- 58:: light source
- 61:: first support roller
- 62:: second support roller
- 63:: shape-imparting roller
- 63a:: concave portion
- 66:: motor
- 67:: pressure adjuster
- 70:: shaping device
- 72:: die unit
- 73:: moving mechanism
- 74:: heater
- 76:: control portion
- 77:: first die
- 77a:: transfer surface
- 78:: second die
- 78a:: transfer surface
- 79:: trunk
- 79a:: guide hole
- 91:: plane portion
- 92:: curved surface portion
- 95a to 95d:: rectangular image area
- AR1:: first region
- AR2:: second region
- AR3:: third region
- AS1(P), AS1(Q), AS2(P), AS2(R):: expected width
- L1:: length of short side
- L2:: length of long side
- L3:: diameter
- ED:: extension direction
- LD:: array direction
- N1:: first normal line
- N2:: second normal line
- N3:: third normal line
- P23:: pitch between lenses
- PL:: plane
- RA, RB:: image row
- T10:: thickness of decorative member
- T21:: thickness of dashboard material main body
- T32:: thickness of lens portion
- W23:: width of lens

## Claims

1. A three-dimensional molding article comprising:
a light-transmitting sheet (31) having a sheet surface (31a) that is curved;
a lens portion (32) that is provided on one sheet surface of the sheet (31) so as to curve along the curved surface and has a plurality of protruding lenses (23) disposed in parallel; and
an image-forming portion (33) which is provided on the other sheet surface of the sheet (31) and on which an image is formed,
wherein the curved surface (31a) has three regions (AR1-3) having different normal directions (N1-3) and has a shape in which one of the normal directions of the respective regions is inclined to a plane including the other two normal directions, and
**characterized by**
a minimum value of widths of the lenses (23) is in a range of 25.4 µm or more and 508.0 µm or less,
wherein the lens portion (32) has a lens having cross-sectional shapes that are different at a first position and a second position in the direction in which the lenses extend.

2. The three-dimensional molding article according to claim 1,
wherein the sheet (31) has a curvature that changes along a direction in which the lenses (23) extend.

3. The three-dimensional molding article according to claim 1 or 2,
wherein the sheet (31) has a curvature that changes along an array direction of the plurality of lenses.

4. The three-dimensional molding article according to any one of claims 1 to 3,
wherein the lens portion (32) includes two lenses having cross-sectional shapes that are mutually different at a third position and a fourth position in the array direction of the plurality of lenses.

5. The three-dimensional molding article according to any one of claims 1 to 4,
wherein a thickness of the lens portion (32) changes along at least any one of the direction in which the lenses extend or the array direction of the plurality of lenses.

6. The three-dimensional molding article according to any one of claims 1 to 5,
wherein a curvature radius of the sheet surface (31a) is at least the width of the lens.

## Patentansprüche

1. Dreidimensionaler Formartikel, der umfasst:
einen Lichttransmissionsblatt (31), das eine Blattoberfläche (31a) aufweist, die gekrümmt ist;
einen Linsenabschnitt (32), der auf einer Blattoberfläche des Blatts (31) derart bereitgestellt ist, dass er sich entlang der gekrümmten Oberfläche krümmt und eine Vielzahl vorragender Linsen (23), die parallel angeordnet sind, aufweist; und
einen Bildformungsabschnitt (33), der auf der anderen Blattoberfläche des Blatts (31) bereitgestellt ist und auf dem das Bild gebildet wird,
wobei die gekrümmte Oberfläche (31a) drei Bereiche (AR1 bis AR3) aufweist, die unterschiedliche normale Richtungen (N1 bis N3) aufweisen und eine Form aufweisen, in der eine der normalen Richtungen der jeweiligen Bereiche zu einer Ebene, die die zwei anderen normalen Richtungen beinhaltet, geneigt ist, und
**gekennzeichnet durch**
einen Mindestwert von Breiten der Linsen (23) in einem Bereich von 25,4 µm oder mehr und 508,0 µm oder weniger,
wobei der Linsenabschnitt (32) eine Linse aufweist, die Querschnittformen aufweist, die an einer ersten Position und an einer zweiten Position in die Richtung, in die sich die Linsen erstrecken, unterschiedlich ist.

2. Dreidimensionaler Formartikel nach Anspruch 1,
wobei das Blatt (31) eine Krümmung aufweist, die sich entlang einer Richtung, in die sich die Linsen (23) erstrecken, ändert.

3. Dreidimensionaler Formartikel nach Anspruch 1 oder 2,
wobei das Blatt (31) eine Krümmung aufweist, die sich entlang einer Anordnungsrichtung der Vielzahl von Linsen ändert.

4. Dreidimensionaler Formartikel nach einem der Ansprüche 1 bis 3,
wobei der Linsenabschnitt (32) zwei Linsen beinhaltet, die Querschnittformen aufweisen, die voneinander an einer dritten Position und einer vierten Position in die Anordnungsrichtung der Vielzahl von Linsen unterschiedlich sind.

5. Dreidimensionaler Formartikel nach einem der Ansprüche 1 bis 4,
wobei sich eine Stärke des Linsenabschnitts (32) entlang mindestens einer beliebigen Richtung, in die sich die Linsen erstrecken, oder der Anordnungsrichtung der Vielzahl von Linsen ändert.

6. Dreidimensionaler Formartikel nach einem der Ansprüche 1 bis 5,
wobei ein Krümmungsradius der Blattoberfläche (31a) mindestens die Breite der Linse beträgt.

## Revendications

1. Article de moulage tridimensionnel comprenant :
une feuille de transmission de lumière (31) présentant une surface de feuille (31a) qui est incurvée ;
une partie de lentille (32) qui est fournie sur une surface de feuille de la feuille (31) de manière à s'incurver le long de la surface incurvée et présente une pluralité de lentilles saillantes (23) disposées en parallèle ; et
une partie de formation d'image (33) qui est fournie sur l'autre surface de feuille de la feuille (31) et sur laquelle une image est formée,
dans lequel la surface incurvée (31a) présente trois régions (AR1-3) présentant différentes directions de normale (N1-3) et présente une forme dans laquelle une des directions de normale des régions respectives est inclinée sur un plan incluant les deux autres directions de normale, et
**caractérisé par**
une valeur minimale de largeurs des lentilles (23) est dans une plage de 25,4 µm ou plus et de 508,0 µm ou moins,
dans lequel la partie de lentille (32) présente une lentille présentant des formes de section transversale qui sont différentes à une première position et à une deuxième position dans la direction dans laquelle les lentilles s'étendent.

2. Article de moulage tridimensionnel selon la revendication 1,
dans lequel la feuille (31) présente une courbure qui change le long d'une direction dans laquelle les lentilles (23) s'étendent.

3. Article de moulage tridimensionnel selon la revendication 1 ou 2,
dans lequel la feuille (31) présente une courbure qui change le long d'une direction de disposition de la pluralité de lentilles.

4. Article de moulage tridimensionnel selon l'une quelconque des revendications 1 à 3,
dans lequel la partie de lentille (32) inclut deux lentilles présentant des formes de section transversale qui sont mutuellement différentes au niveau d'une troisième position et d'une quatrième position dans la direction de disposition de la pluralité de lentilles.

5. Article de moulage tridimensionnel selon l'une quelconque des revendications 1 à 4,
dans lequel une épaisseur de la partie de lentille (32) change le long d'au moins l'une quelconque parmi la direction dans laquelle les lentilles s'étendent ou la direction de disposition de la pluralité de lentilles.

6. Article de moulage tridimensionnel selon l'une quelconque des revendications 1 à 5,
dans lequel un rayon de courbure de la surface de feuille (31a) est au moins la largeur de la lentille.
